# EUROPEAN PATENT SPECIFICATION

(11) **EP 0 931 430 B1**
(45) Date of publication and mention of the grant of the patent: **28.06.2006**
(21) Application number: 97941526.2
(22) Date of filing: 10.09.1997
(51) Int. Cl.: H04Q 7/38, B60R 25/00, G07C 9/00

(54) **METHOD OF USING FINGERPRINTS TO AUTHENTICATE WIRELESS COMMUNICATIONS**
VERFAHREN ZUR ANWENDUNG VON FINGERABDRÜCKEN FÜR DIE BEGLAUBIGUNG VON DRAHTLOSEN KOMMUNIKATIONEN
PROCEDE D'UTILISATION D'EMPREINTES DIGITALES POUR L'AUTHENTIFICATION DES COMMUNICATIONS SANS FIL

(30) Priority: 11.09.1996 US 25947 P; 08.09.1997 US 925024
(43) Date of publication of application: 28.07.1999
(73) Proprietor: Li, Yang, Mountain View, CA 94040 (US); Rao, D. Ramesh K., Menlo Park, CA 94025 (US); Subbiah, Subramanian, Menlo Park, CA 94025 (US)
(72) Inventor: Li, Yang, Mountain View, CA 94040 (US); Rao, D. Ramesh K., Menlo Park, CA 94025 (US); Subbiah, Subramanian, Menlo Park, CA 94025 (US)
(74) Representative: O'Connell, David Christopher
(86) International application number: PCT/US1997/016094
(87) International publication number: WO 1998/011750

(56) References cited:
- EP-A- 0 304 547
- EP-A- 0 457 398
- EP-A- 0 583 011
- WO-A-96/18169
- DE-A- 2 533 699
- DE-A- 3 610 397
- DE-A- 3 743 856
- US-A- 4 747 147
- US-A- 5 109 427
- US-A- 5 131 038
- US-A- 5 402 490
- US-A- 5 420 908

## Description

### Cross Reference to Related Applications

This application claims priority from (1) US Provisional Patent Application No. 60/025,947 filed September 11, 1996, entitled METHOD OF USING FINGERPRINTS TO ELIMINATE WIRELESS PHONE FRAUD AND TO ASCERTAIN A CALLER'S IDENTITY and naming Y. Li. D. R. K. Rao, and S. Subbiah as inventors, and (2) US Provisional Patent Application No. 60/025,949, filed September 11, 1996, entitled EMBEDDABLE MODULE FOR FINGERPRINT CAPTURE AND MATCHING, and naming R. Rao, S. Subbiah, Y. Li. And D. Chu as inventors.

### Background of the Invention

The present invention relates to security measures for wireless telephones or cellular mobile phones. More particularly, the invention relates to authentication methods employing biometric information (e.g., fingerprints) to guarantee non-fraudulent use of wireless telephones or cellular mobile phones.

As known in the state of the art, wireless telephones or cellular mobile phones are identified by mobile identification numbers (MINs) and electronic serial numbers (ESNs). Current protocols for wireless communication, either placing or receiving a call, require both the MIN and the ESN to be broadcast through a standard common air interface (CAI) between the wireless telephone and a mobile switching center (MSC) for authorization and billing purposes. However, such information can be easily intercepted and obtained via specialized scanning equipment that is readily available. MINs and ESNs captured this way can be illegally programmed into other cellular phones for the purpose of placing calls that will be billed to the person that the MIN and ESN has been legitimately assigned to. This type of theft has become a common practice world-wide, and millions of dollars are lost to the wireless service provider and law enforcement agencies (US $650 million in 1995).

Various methods have been proposed to solve this problem. One method (described in U.S. Patent No. 5,448,760) proposes the idea of requesting a personal identification number (PIN) each time a call is placed. The PIN can be safely transmitted through a different channel. However, this inconveniences the user and many users even forget their PINs. Another method (described in U.S. Pat No. 5,420,908) proposes monitoring each customer's habit or calling pattern (also known as user profiles) and blocking any calls that do not fit the customer's previous calling pattern. However, such a method suffers from two problems: (1) the calling pattern of a customer is difficult to accurately pin point (any time the calling pattern changes a legitimate call might be blocked) and (2) it will not successfully block calls from phones that continually change the MIN-ESN pair that they employ.

WO 96/18169 discloses a storage device having stored therein an electronic image of a fingerprint of an individual authorized to conduct a transaction. A finger, of a person conducting the transaction, is scanned to form electronic data signals corresponding to an electronic representation of the fingerprint. The stored electronic image is compared with the electronic data signals corresponding to the image fingerprint of the person conducting the transaction. The transaction is authorized only when the electronic data signals corresponding to the image fingerprint of the person conducting the transaction substantially correlate with the stored electronic image of the fingerprint of the individual authorized to conduct the transaction. In one embodiment, the electronic data signals corresponding to the image of the fingerprint of the person conducting the transaction are transmitted over the encrypted communication link to a remote comparator which compares the stored electronic image with the electronic data signals corresponding to the image of the fingerprint of the person conducting the transaction.

In another method (described in U.S. Pat No. 5,420,908 issued to Hodges and Rubenstein), a "challenge response" authentication scheme is proposed to solve fraudulent use in wireless communication. The proposed method includes a central authentication system serving several MSCs which store all MINs with associated secret keys that are used to generate the "challenge response" authentication. Having one central authentication system for several MSCs eliminates the need for cross-system access between different MSCs. However, for security reasons - e.g. power failure, computer hacker attacks, natural disasters - there should be at least one additional remote site that maintains a mirror copy of the central authentication system. Ideally backup communication between central authentication system and its mirror(s) allow both hot and cold backups to dynamically maintain identical copies at all times. All MSCs communicate with the central authentication platform through a standard phone line. This method also requires each wireless phone to have a device which contains special information to generate a correct response to a specific "challenge". Each time that a user uses a cellular phone, the MIN and ESN are sent to the MSC just as in the standard protocol used in wireless communication today. Then the MSC sends the information through a secure public switched telephone network (PSTN) line to the central authentication platform. The central system then takes the secret key which is associated with the MIN and generates a challenge which is sent to the cellular phone through a different wireless forward channel. The cellular phone then uses its special internal module to generate a response to the challenge which is then sent back to the MSC by wireless means and then forwarded to the central system via standard PSTN lines. The central system then compares the cellular phone's response to the precalculated response value it expects. If the response is correct the use is authorized.

Such a system has certain advantages and should improve security in wireless communication. Although no specific type of secret key was disclosed in the '908 patent, the specified secret keys- including a string of special integers - suffer major drawbacks. First, computer systems are always subject to intruders/hackers. For example, just recently there was the much celebrated case of Tsutomu Shimomura the network security expect and his attacker Kevin Mitnick the outlaw computer hacker (In Takedown by John Markoff and T. Shimomura, Hyperion Press: USA 1995). In the case of a break-in or even a suspicion of a break-in, all stored secret keys arc rendered useless and all the keys need to be updated. This necessarily means that all the users have to visit their service provider in person and update their secret key. Second, if only one or a few keys arc stolen at any given time, the system would not be able to detect the theft until the end of each billing cycle (if even then). Third, the "challenge" is MIN-specific, the thieves who capture the MIN and ESN through the air interface can also capture the "challenge" and its "response" and attempt to crack the secret key. While some encryption methods like RSA can be made very secure now, the powerful computers that can be expected to become widely available in the future may allow secret keys to be cracked with the knowledge of multiple challenges and their responses. Still further, with the global computer connectivity, Internet viruses have become a major issue and almost every week there is a new virus that is released, particularly from less developed countries. If the central authentication system gets infected and the files tampered with, as before, all users have to return to their service provider to have a new secret key reissued. All these four scenarios arc quite likely to happen in our age of high-tech criminals and even-higher tech teenage pranksters.

What is needed therefore, is an improved security system to protect against unauthorized use of wireless communications. The method and associated system should provide improved security and be easy to maintain.

### Summary of the Invention

The current invention expands on the principles and protocols discussed above. The relevant extension involves using a token generated from biometric information, the user's personal fingerprint in particular, as the secret key in the context of a modified "challenge-response" scenario. As will be explained, this virtually eliminates all of the drawbacks discussed above. Most generally, the invention involves the use of fingerprint matching to authenticate a call or other communication over a wireless communication network. The matching may be employed at a central location on the network, at the personal wireless device, or both.

One aspect of the invention provides methods of authenticating calls to be made over a communication system. Typically, both a wireless source (e.g., a mobile telephone) and a central authentication node that may service numerous nodes participate in the methods -- although cach operates according to its own protocol. An authentication method implemented on the central authentication node may be characterized by the following sequence: (a) determining that the call has been initiated from a source; (b) determining whether source fingerprint data provided from said source matches stored fingerprint data associated with said source; and (c) if said source fingerprint data matches said stored fingerprint data, allowing said call to be completed; characterised in that the step of determining whether source fingerprint data provided from said source matches stored fingerprint data associated with said source comprises the steps of: (d) encrypting a challenge with said stored fingerprint data associated with said source to produce an encrypted challenge; (e) providing the encrypted challenge to the source for the purpose of decrypting by the source with the source fingerprint data; (f) receiving the decrypted challenge from said source, which decrypted challenge has been decrypted with the source fingerprint data; (g) comparing the challenge with the decrypted challenge from the source; and (h) determining that the source fingerprint data provided from said source matches the stored fingerprint data associated with said source if the challenge matches the decrypted challenge from the source. Matching may involve separate matching steps at both the source and the central authentication node. In addition to the above basic steps, the authentication node may request that the source fingerprint data be provided from the source of the call. In the case of mobile telephone system, the call initiated from the source may be forwarded through any of a plurality of mobile switching centers to reach the central authentication node. That is, the central authentication node may serve multiple switching centers. In a preferred embodiment, the central authentication node accesses the stored fingerprint data from a database that associates particular users' accounts with their fingerprints. The fingerprint data (from the source or stored database) may be embedded in a token having a format making it difficult to extract the fingerprint data. In one embodiment, that token format may be an inter-minutiae distance-vector-derived format such as one of the formats commonly employed in the art.

In a particular preferred embodiment, the method involves a further security feature to avoid use of a stolen fingerprint token. This technique operates on the assumption that each time an individual gives a fingerprint, the print is slightly different due to the flexibility of the finger skin, the angle at which the finger is pressed down, etc. Thus, it is exceedingly rare that any two finger imprints from a given user will be identical. Recognizing this, the method may require the following: (a) determining whether the source fingerprint data is identical to one or more instances of sample fingerprint data previously received; and (b) if the source and any one of the instances of the sample fingerprint data are identical, preventing the call from being completed.

As noted the biometric "challenge-response" authentication scheme of this invention preferably employs a central authentication platform serving several or all MSCs and wireless phones. In this manner, the current invention seeks to prevent fraudulently placed wireless calls using stolen MIN-ESN information.

These and other features and advantages of the present invention will be further described below with reference to the associated drawings.

### Brief Description of the Drawings

Figure 1 is a block diagram of various components of the present invention as it may be employed in a cellular phone system.
Figure 2 is a representation of a MIN-challenge key database table used to store tokens from biometric information in accordance with one preferred embodiment of this invention.
Figures 3A and 3B together present a process flow diagram depicting a sequence of events in a challenge-response authentication method of the present invention.
Figure 4 is a block diagram depicting basic components of a fingerprint capturing unit and an associated wireless telephone in accordance with a preferred embodiment of the present invention.
Figure 5 is a flow diagram depicting a fingerprint matching technique that may be employed with the present invention.
Figure 6 is a block diagram of a central authentication system for processing biometric information from a mobile telephone in accordance with one embodiment of the present invention.

### Detailed Description of the Preferred Embodiments

The present invention is described herein in terms of a wireless telephone system. The invention is not so limited. For all purposes of this current invention, the term "wireless telephone" (or "wireless communication system") generically will be understood to include cellular phones, personal communication systems, telephones, personal digital assistants, wireless personal computers, wireless notebooks, etc. using analogue or digital electronics technology. While the present invention is currently envisioned as providing substantial benefit to wireless communications, there is in principle no reason why it could not be applied to communications generally. Any communication that could benefit from authentication may be implemented with the present invention. Such communications include those made over a wire-based telephone system and employing an account code.

The communications allowed over the communication system will sometimes be referred to herein as "calls." Examples of communications (calls) within the context of this invention include (a) analog transmissions such as telephone calls transmitting analog voice data over a wire medium or a wireless medium and (b) digital transmissions such as packetized messages over a network (LAN, WAN, Internet, etc.) and digital voice data over a wireless medium. Communications involving packetized transmissions may be connection-based transmissions such as TCP or connectionless transmissions such as UDP.

Fingerprint technology including hardware image capture, software image processing, software/hardware for fingerprint data storage and software for fingerprint analysis/comparison is a relatively mature technology with over 20 years of development (see, for example, U.S. Pat. Nos. 2 952 181, 4 151 512, 4 322 163, 4 537 484, 4 747 147, 5 467 403). It is well-known that no two individuals possess the same identical fingerprint and that accurate matching techniques in conjunction with well-captured images can positively identify an individual. The term "fingerprint" as used herein refers to handprints, palmprints, and other unique skin patterns in addition to traditional fingerprints.

The present invention may employ sophisticated hardware and software to allow rapid fingerprint based identification as described in U.S. Provisional Application No. 60/025,949, filed on September 11, 1996, naming R. Rao, S. Subbiah, Y. Li & D. Chu as inventors. That application describes an extremely small, low-cost fingerprint capture hardware module that lends itself to ready insertion into many devices. The referenced Provisional Application is illustrative of the maturity of the fingerprint capture and comparison technology.

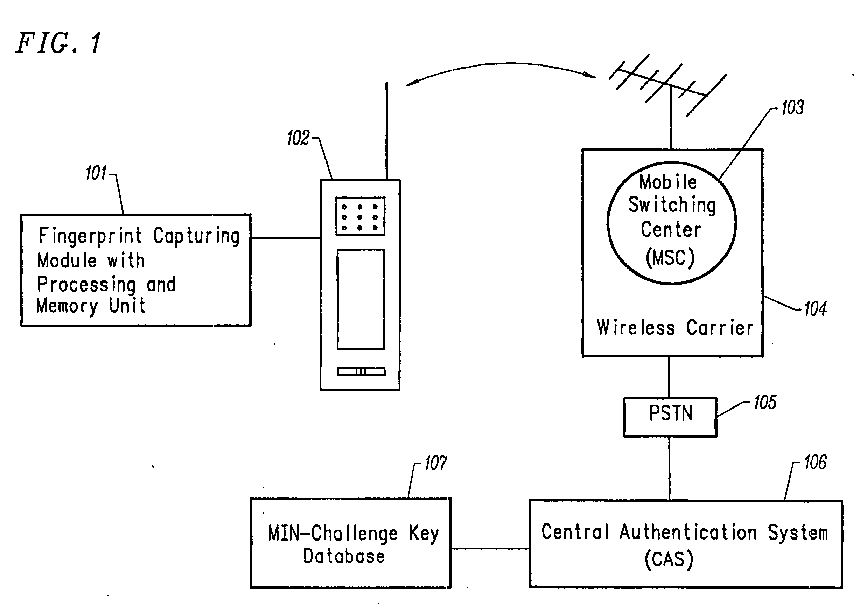

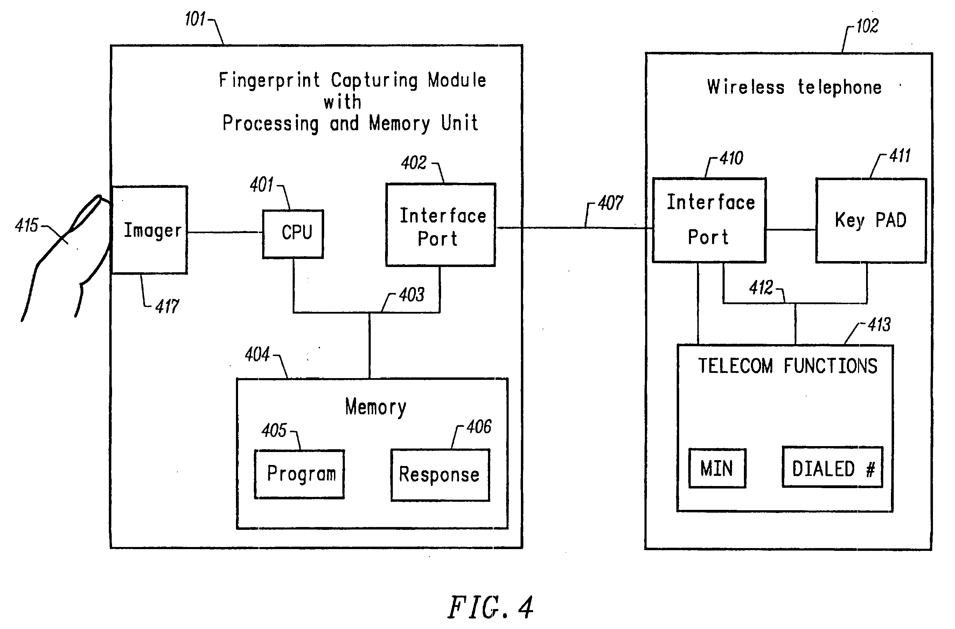

FIG. 1 shows an apparatus that may be used to process a wireless call in accordance with the principles of the current invention. A fingerprint capturing device ("FCPD") 101 (such as that described in U. S. Provisional Application No. 60/025,949) with an on-board CPU for processing and comparison of the captured fingerprint image (see FIG. 4) is connected to the wireless telephone 102. This connection may be by any method, i.e., via a telephone modem or a data port specifically built-in to the wireless telephone 102, an acoustic coupler, or the direct incorporation of the fingerprint module 101 into the wireless telephone 102. Preferably, the module 101 can be incorporated within telephone 102 such that a standard mobile telephone casing may house all electronics for operation of the telephone and fingerprint processing. In an especially preferred embodiment, the electronics for processing both the fingerprints and the telephone calls are provided on a single integrated circuit chip. This makes it especially difficult to tamper with the system by, for example, intercepting signals between fingerprint capturing module 101 and telephone 102.

In one embodiment of the invention which employs a protocol similar to that of conventional wireless systems, cach phone is provided with a MIN and ESN. When the user dials a telephone number using a keypad 112 on the wireless telephone 102, the MIN, ESN, and the number of the party being called is transmitted to a Mobile Switching Center (MSC) 103. of a wireless carrier 104. In response, MSC 103 performs the standard verification of the MIN and ESN as well-known in the art (see for example. In Wireless Communications, by T. S. Rappaport, 1996. Prentice-Hall which is incorporated herein by reference for all purposes). If the MIN and ESN belong to a special group of users who have previously requested the additional layer of fingerprint based security with their service, the MIN and ESN are sent to a Central Authentication System (CAS) 106 via a public switched telephone network (PSTN) or Internet 105 to avoid direct access of CAS 106 through the air interface. This provides additional security for the CAS.

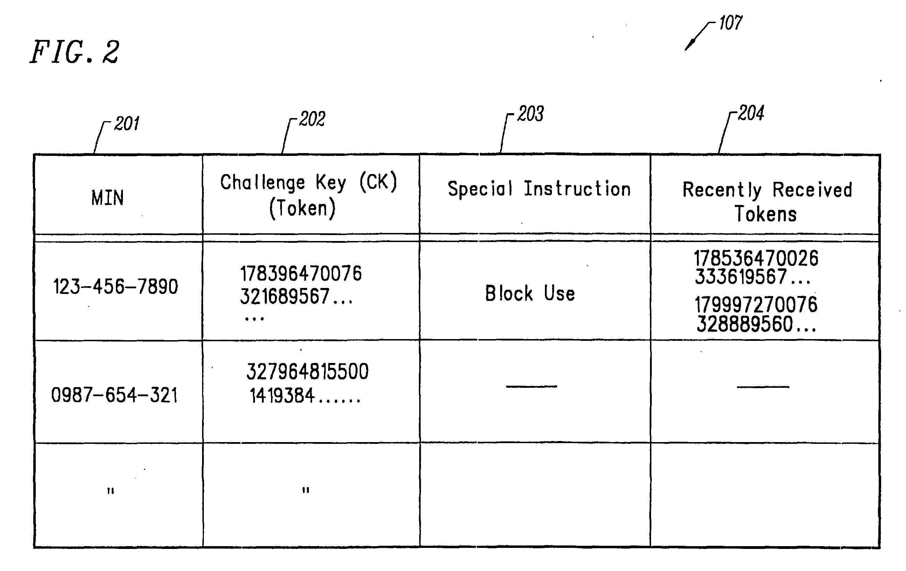

In response to the MIN being forwarded by MSC 103, CAS 106 looks up its built-in MIN-Challenge Key Database (MCKD) 107 and retrieves an appropriate Challenge Key (CK 202, FIG. 2) that is associated with that particular MIN. The CK 202 is a token that has been derived from the user's fingerprint when the user first registered the purchase of his/her phone service. The CK 202 is then used to encrypt a "challenge" that is generated by the CAS 106. The challenge that is formulated by the CAS 106 is different cach time when it is accessed by the same or different users. The CK 202 and the encrypted challenge arc then jointly sent to wireless telephone 102 through any available forward voice channel (FVC) or forward control channel (FCC) for example.

After reception of the challenge from CAS 106 by wireless telephone 102, the challenge is forwarded to FCPD 101 as detailed in FIG. 4. The user's fingerprint information could have been requested by FCPD 101 either before this point and after the user entered the number or the called party, or at this time point itself. A token, which in one embodiment could simply be an encoded collection of a set of unique minutiac/features found in the fingerprint, is then generated based on the fingerprint information captured locally by FCPD 101. As well-known in the art of fingerprint matching, a fingerprint from any individual is unique to that individual and therefore the variety of slightly different tokens (tokens can differ by a feature or two without any loss in uniqueness) that can be generated can only come from that individual. This is then compared with fingerprint-based token CK 202 that was received from CAS 106. If there is a match of the tokens, the encrypted message is decrypted by using token CK 202 received from CAS 106. In other embodiments, either or both tokens could be used to decrypt the challenge. A response (the decrypted challenge) is then sent back to MSC 103 through any of the available reverse voice channels (RVCs) or reverse control channels (RCCs). This is then forwarded via PSTN or Internet 105 (for additional security one may limit use of the common air interface as much as possible) back to CAS 106.

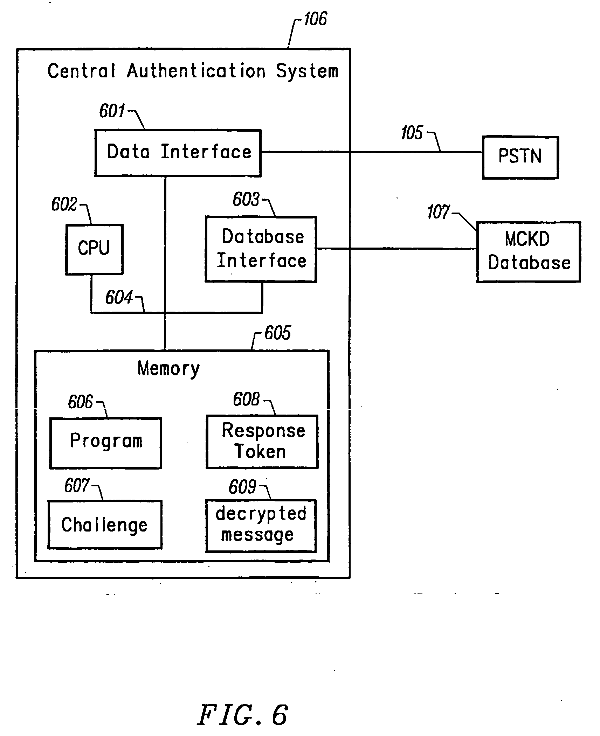

The response from FCPD 101 to CAS 106 contains both the decrypted message and a token that is generated from the fingerprint image the user supplied. If (1) the received decrypted message matches the expected response (i.e., the original unencrypted challenge that had been temporarily stored in CAS 106, as detailed in FIG. 6) and (2) the token received from the FCPD 101 matches the CK 202 in the MCKD 107, the call is authorized and connected. This double matching method will reduce false positives. It will also prevent any illegal attempt that relies only on a decryption of just the encoded challenge.

It is important to note that tokens generated from the same finger vary every time the fingerprint is captured. In a preferred embodiment, if the token sent from FCPD 101 (via wireless telephone 102) is identical to that in the database (CK 202) the call will not be authorized, since it is extremely unlikely that the exact same token will be generated in subsequent image capture of the same finger. Presumably, such exact token matching will only happen if the token had been illegally captured and is being used for illegal access into the phone network. In this embodiment, the database may store up to a pre-specified number of tokens sent by user from wireless telephone 102. If the most current token sent from the user is identical to any token from this list, the call is also blocked, since this may indicate the interception of a particular token sent from user to CAS 106 and used illegally. This is a major advantage of the current invention since the token CK 202 used for encryption (in other words the secret key that is central to all 'challenge-response' authentication methods) can itself be broadcast over the common air interface or even made public. Thus the secret aspect of system described in the above-referenced Hodges and Rubenstein patent may be avoided in one embodiment. To reiterate, by blocking exact matches between a newly generated token and a stored token (one embodiment of this invention), the illegal capture of the token CK 202 docs not enable third-parties to fraudulently initiate calls. This is a clear and substantial advantage over the prior art, and derives from the fact that personal biometric information is being used to generate secret keys.

A further advantage is the token's resistance to corruption due to wireless noise. In one embodiment, a loss of a few features of the minutiae set from the token will still leave sufficient uncorruptcd features to allow unique matching against another token derived from the same finger. One could therefore expect a "fuzzy" (non-deterministic) set of minutiae, that will give unique matching. Another advantage of the current invention, derives from the fact that the CK 202 tokens can be made public with no ill effects. Thus if the database MCKD 107 is stolen or attacked by computer hackers and viruses, as long as a backup copy of the database MCKD 107 exists at a remote and secure mirror-site, there is no lasting negative consequence (so long as exact matches with prior stored tokens require that a call be blocked).

FIG. 2 shows typical structure for the MIN-Challenge Key Database 107 ("MCKD") in accordance with one embodiment of this invention. A CK 202 is stored in association with each MIN 201. Additional instructions or restrictions on the use of each MIN 201 can be stored in a special instruction section (SIS) 203. These may include, for example, blocks on long distance calls to certain localities, restrictions on calls over a certain dollar amount, etc. In addition, MCKD 107 includes a column 204 for storing recently received tokens from FCPD 101. Anytime that a received token exactly matches one of the tokens stored in column 204, the call may be blocked.

The CK 202 is a token that is generated from the fingerprint that the user initially provided when registering with the phone company. This token contains information pertinent to the fingerprint minutiae information that has been embedded so as to ensure that if stolen it would not lead to a loss of the original fingerprint itself.

Since fingerprint images vary slightly from print to print, such tokens from the same finger at repeated times will be different. Also, depending upon the format of fingerprint minutiae in the tokens, two separately generated tokens of the same print will not from the outside appear similar - only when fingerprint matching algorithms for comparison are applied to both tokens generated from different impressions of the same finger can both tokens be deemed to be from the same fingerprint. Thus simple possession of a token from a given fingerprint will not enable anyone to generate other different tokens corresponding to a different fingerprint impression from the same finger. This renders the method very robust and tamper proof.

Token matching first requires extraction of the fingerprint minutiae from the token. These are then compared by matching their two-dimensional coordinates. If the coordinates match to within a defined tolerance, the tokens are deemed a match. As explained below, tokens may be provided with a timestamp as an extra security measure.

As known in the state of the art, many fingerprint matching schemes involve the generation of inter-minutiac-based keys (i.e., distance vectors, etc.) that while being generally similar, will vary between multiple impressions of the same finger. Various inter-minutiae distance-vector-derived formats arc known in the art. Many of these (as well as variations on them) may be suitable for generating keys in accordance with this invention. Such keys may, of course, also serve as tokens such as CK 202 in this invention. Suitable matching schemes are described in, for example, US Patent No. 4,747,147 issued to Sparrow on May 24, 1988, US Patent -No. 5,493,621 issued to Matsumura on February 20, 1996, and information provided at the World Wide Web site www.Lucent.Com/Press/0597/minul.GAF.

A typical description of a processed fingerprint is a list of x, y and angle tabulation of each minutia. Minor modification to these linear values (e.g., adding slight random displacements) will still reflect the same underlying fingerprint, allowing for variation during multiple impressions (e.g., slight distortions and rolling during the pressing of the finger). Thus, using straightforward minutiae tabulations as tokens is susceptible to minor modification that could result in illegal phone access.

A different and frequently used description of fingerprint information is the inter-minutiac distance vector information. Such descriptions arc inherently non-linear in nature and so when tabulations of these arc randomly or systematically modified (i.e. without explicit knowledge of the inherent non-linearity) in minor and linear ways, the new modified tabulation will not, in general, reflect the underlying original fingerprint, even when allowing for variation between multiple impressions of the same fingerprint.

Thus, use of such inter-minutiac distance-vector-derived keys (tokens) for matching purposes will foil wireless fraudsters who may somehow illegally capture the transmitted and encrypted fingerprint information and try to use the exact same keys to fraudulently activate phone calls. That is, in general legal phone use, one expects the transmitted fingerprint keys to be somewhat different each time, and different in a way that makes sense with respect to the fingerprint. In illegal use, where the encrypted keys are captured, decrypted and re-transmitted, the repeated use of a set of exact same identical keys can be readily detected. Any minor modification of the keys, without specific prior knowledge of non-linear relationships in order to be true has to be compatible with the true fingerprint and thus leading to the detection of such fraudulent use.

The advantages of using a central authentication platform and a "challenge-response" authentication method are described in U.S. Patent No. 5,420,908 described above. However, the "challenge-response" authentication suggested in that patent differs significantly from the current invention in at least two ways: First, the patent suggests a shared secret key (S-key) between the wireless phone and the central authentication system. This necessarily requires a specialized memory chip that can store the S-key to be part of the wireless phone itself. Therefore, in the event that the wireless phone is lost or stolen, illegal calls can be made from the phone unless special instructions to block such newly illegal calls have been sent to the central authentication system. The current invention, in contrast, relies on information that is stored at the user's fingertips itself, and therefore does not require the wireless phone unit itself to store any secret key/information. Consequently, a stolen or lost phone cannot be used illegally. Second, the challenge-response method described in the 908 patent docs not transmit the S-key itself over the air interface. The present invention may allow transmission of the "secret" key through the air interface; because the present challenge-response authentication scheme is not dependent on the "secret" key per se. In a preferred embodiment, however, the key (CK 202) is kept secret by some acceptable technique such as sending the challenge and response over variable channels unrelated to the voice transmission and/or providing additional encryption of the keys themselves.

By using personal biometric information, like fingerprints, the present invention may overcome the major drawbacks of the generic "challenge-response" authentication schemes as typified by the '908 patent method.

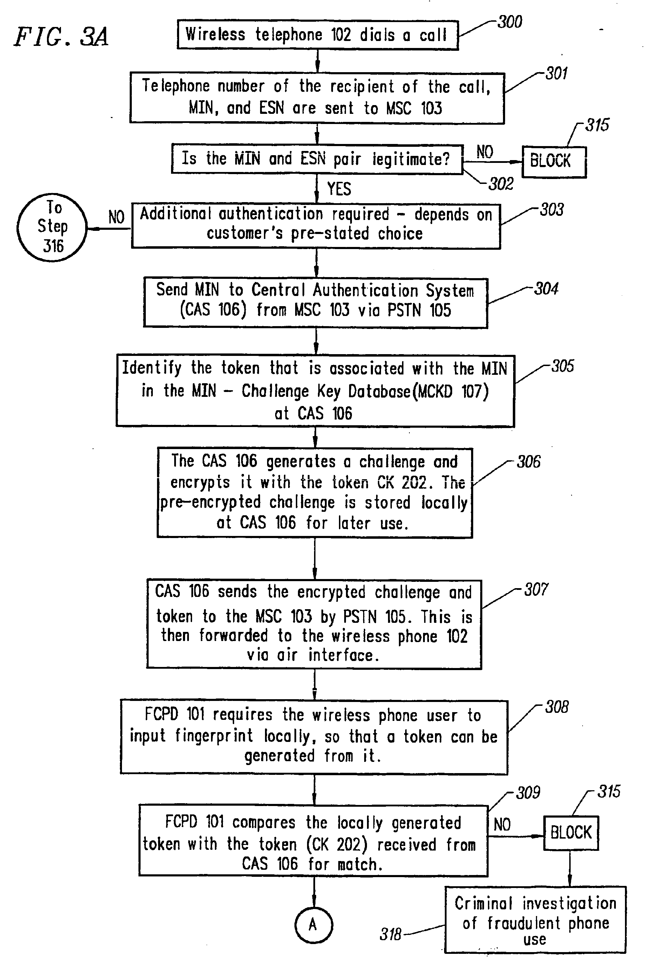

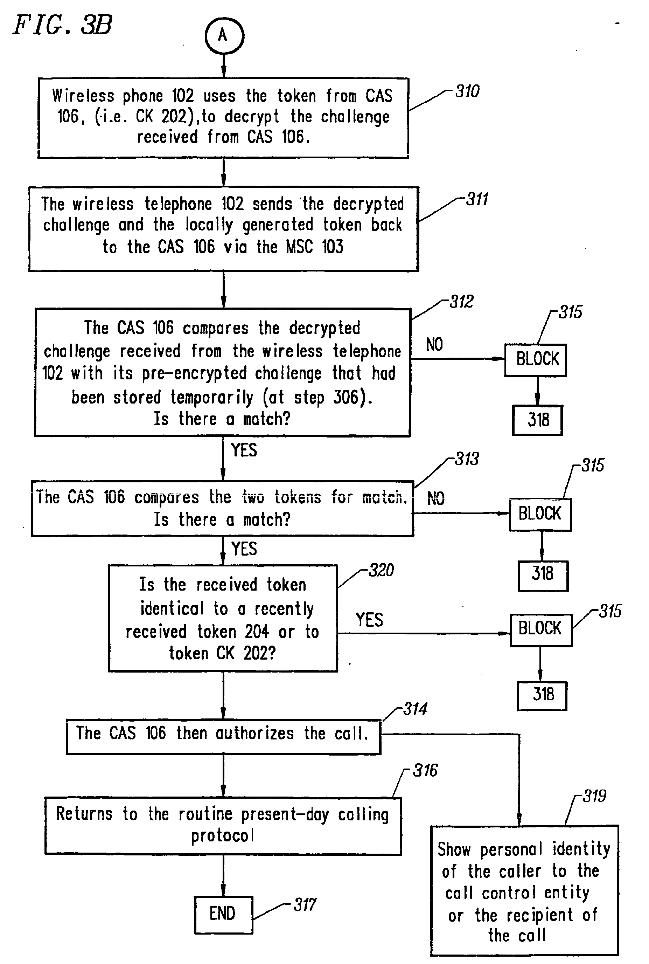

FIGS. 3A and 3B present a flow chart of one typical sequence of events in a "challenge-response" authentication of this invention. The user begins the process at a step 300 by dialing a telephone number using the keypad 112 of the wireless telephone 102. The MIN, ESN. and the phone number of the party being called are transmitted to MSC 103 at a step 301. At a branch point 302, as in a conventional system. MSC 103 either confirms the legitimacy of the M IN-ESN pair and goes to a next step 303, or blocks the call at a step 315. At a branch point 303, the MSC determines if the user of the MIN requested additional security. If the result is NO, the call is connected just as routinely done in a convcntional system at a step 316. If the result is YES, the MIN is sent to the CAS 106 at a step 304.

In a step 305. CAS 106 accesses MCKD 107 and requests token CK 202 that is associated with the MIN. CAS 106 then generates a challenge that is different each time. This is then encrypted with the token 202 in a step 306. The CAS 106 sends token CK 202 and the encrypted challenge to the wireless telephone via a step 307 using PSTN or Internet 105. Additional layers of security can be added to the encrypted challenge and CK 202 if so desired. For example, the encrypted challenge can be sent to the mobile wireless phone over a different wireless forward channel.

In a step 308, the user gives his/her fingerprint to the FCPD 101 and this is used to generate token. In certain variations, step 308 can be performed at any point after step 301 and the generated token stored in a memory 404 (FIG. 4). After the encrypted challenge has been sent to phone 102 and a token has been generated from the user's fingerprint. FCPD 101 compares the generated token with the token it received from the CAS 106 at a conditional branch point 309. If they do not match, the call is blocked at a step 315. In one embodiment, whenever a call is blocked the token sent by FCPD 101 of the caller's fingerprint, can be forwarded via MSC 103 through CAS 106 and specially stored for later-criminal investigation of fraudulent phone use (step 318). If they match, the token received from CAS 106, or in other embodiments both tokens (including the one generated at the phone), is used to decrypt the challenge sent from CAS 106 in a step 310 (begin FIG. 3B). The FCPD 101 then sends both the now-decrypted challenge and the locally generated token (from the user's fingerprint captured on FCPD 101) back to CAS 106 by way of MSC 103 via a step 311.

Generally, the invention's direct mapping of individuals personally to the phone calls they make also allows the mapping of callers who attempt unsuccessful break-ins into the wireless phone system. Permanent records of the tokens generated from the fingerprints of callers attempting illegal entry can be kept, if desired, for further criminal investigation. More importantly, the more idea of the potential of being caught when illegally using someone else's phone may greatly reduce phone fraud.

After receiving the decrypted challenge from FCPD 101, CAS 106 compares it with the challenge stored in a CAS temporary memory 607 (FIG. 6) at a conditional branch point 312. If the match is not successful the result from step 312 is NO and the call is blocked at a step 315 and then step 318 may be permitted if so desired. If there is a match the result is YES and the process moves on to a conditional step 313. At this step, CAS 106 compares the token generated from the user's fingerprint captured and sent by FCPD 101 to one or more stored in its database 107 at column 202. If these tokens do not match, the call is blocked, again at step 315 and step 318 is optionally performed. This second matching of the tokens (note that they were initially compared at step 309) is provided for additional security and may be dispensed with if desired.

Next, at an optional decision step 320, CAS 106 compares the token received from FCPD 101 with one or more stored tokens which were previously received from FCPD 101 and CK 202. These previously received tokens arc preferably those stored in column 204 of database table 107. If it is found that the most recently received token exactly matches one of the tokens stored in columns 202 and 204 of database 107, the call is blocked at step 315 (and step 318 is optionally performed). As noted above, tokens are generally not identical if they capture a fingerprint with sufficient resolution because each fingerprint from a given individual will vary slightly (e.g., the minutiae may be slightly offset from one another). To ensure authentication in the case where a given individual actually does give two identical legitimate tokens, the system may only block the call if two or more successive tokens exactly match one or more of the stored tokens.

If the tokens match at step 313 but not identically (optional step 320), the call is authenticated for connection at a step 314. Thereafter, at a step 316, the process returns to the routine present-day calling protocol to complete the connection. If needed, allowance, for failed authentication due to severe token corruption from wireless noise etc., can be made by having the protocol automatically re-try the entire procedure at step 304. The entire process exits at a step 317 and ends the illustrated flow-diagram.

In a further preferred embodiment, the format of the embedded fingerprint minutiae contains a timestamp specifying the time at which the user's fingerprint was taken. The CAS would then deny access if the timestamp was not from an appropriate window in time (chosen to allow for a reasonable delay between transmission of the challenge and receipt of the newly generated fingerprint token). If a person should intercept the user's fingerprint token, not only would he/she have to extract the fingerprint minutiae, but he/she would also have to properly update the timestamp in order defeat the system. In some embodiments, the CAS only checks for timestamp, rather than examining the newly received token for an exact match to some multiple previously received tokens.

FIG. 4 is a diagram presenting one embodiment of the FCPD 101 and its interconnection with the wireless telephone 102 (FIG. 1). The illustrated FCPD 101 contains a fingerprint imager 417 for converting a fingerprint from a finger 415 into an a finger print image. FCPD 101 also includes a CPU (central processing unit) 401 that can supply all the computational needs of the "challenge-response" authentication process, and more importantly all necessary processing of fingerprint images and their subsequent comparison. An interface port 402 and a data bus line 403 arc together capable of handling all the communications between various parts of FCPD 101 and wireless telephone 102. This includes all types of serial interfaces and voice channels for transmitting and receiving data. A memory module 404 stores at least those items necessary to the operation of FCPD 101 including: 1) a software program 405 which contains program codes for fingerprint image processing, matching, decryption of the challenge, and the generation of responses; and 2) a response storage unit 406 which temporarily stores the response before sending it to the CAS 106.

CPU 401 can be any suitable integrated circuit or electronic design including multichip modules and circuitry formed on printed circuit boards. If it is an integrated circuit, it may a general purpose microprocessor, a logic device such as an application specific integrated circuit (ASIC), etc. Examples of suitable ASICs include gate arrays, simple and complex programmable logic devices (PLDs), digital signal processors (DSPs), and field programmable gate arrays (FPGAs).

In one embodiment, fingerprint imager 417 includes a fingerprint capture surface such as a window or capacitor array which produces an image of the user's fingerprint when the user places his or her finger thereon. In addition, imager 417 includes the optics necessary direct an optical image of the fingerprint onto a solid state imager which also forms part of fingerprint imager. The solid state imager, which is preferably a CCD array or a CMOS photodiode/photogate array, generates an electronic image of the user's fingerprint. If the solid state imager is a CMOS photodiode/photogate array, it may be provided on single integrated circuit together with processing logic such as CPU 401. Further details of suitable optical fingerprint imagers are provided in U.S. Provisional Application No. 60/025,949, "Embeddable Module for Fingerprint Capture and Matching," filed on September 11, 1996, and naming R. Rao, S. Subbiah, Y. Li & D. Chu as inventors. In an alternative embodiment, imager 417 may be a capacitor array formed on a semiconductor substrate such as that described in the May 22, 1997 edition of the San Francisco Chronicle, "New Chip Verifies Fingerprints" which pertains to a product of Veridicom Corporation. In another alternative embodiment, imager 417 may be an ultrasonic mechanism formed on semiconductor substrates.

It is important to note here an advantage over the "challenge-response" authentication method presented in U.S. Pat. No. 5,420,908 (referred to as the Secret-Kcy). In the present invention, "key" need not be persistently stored in the FCPD 101 module. Therefore the wireless telephone cannot be used by any other user even when it is lost or stolen.

In a preferred embodiment, telephone 102 is a conventional wireless telephone. It communicates with FCPD 101 over a connection line 407 which may be a parallel or serial connection. Telephone 102 may contain a key pad 411, all necessary telecommunication functions 413 (including a stored MIN and provisions for generating a dialed number from key pad inputs), data bus lines 412, and an interface port 410 for communicating with FCPD 101 (over connection line 407) and with wireless stations such as an MSC. It is important to note that interface port 410 should be capable of interfacing not only voice communication signals (for standard mobile phone operation), but other communication for control between the CAS 106 and the FCPD 101 to complete the "challenge-response" authentication. In a preferred embodiment; interface port 410 is capable of sending and receiving fingerprint data over a data channel which operates at a different frequency from a communications channel which sends and receives the wireless communications (e.g., voice data).

Preferably, FCPD 101 is integrated directly within the casing of a conventional wireless telephone or other communication source. The only distinction being the presence of a fingerprint capture window on the side of the telephone and accessing imager 417. In an especially preferred embodiment, a single integrated circuit provides most of the functions of FCPD 101 and telephone 102. These functions include, for example, CPU 401, memory 404, and telecom functions 413. As functions from both FCPD 101 and telephone 102 arc provided on the same chip, interface port 402 and connection line 407 arc not required. A modified version of interface port 410 having only the functionality necessary to communicate with other wireless stations (not FCPD 101) may be employed on the integrated circuit. This single chip embodiment has the advantage an extra layer of security as thieves will be unable to directly monitor signals crossing connection line 407.

If fingerprint imager 417 is a CMOS imager, it may integrated with other components on the integrated circuit. If imager 417 is a CCD array, it typically will have to be provided on a separate chip.

Suitable design parameters of FCPD 101 can be specified based upon the general requirements of fingerprint analysis and matching algorithms. A typical human fingerprint has an aspect ratio of about three to two; that is, it is one-half times as long as it is wide. The average fingerprint has about 50 ridgelines separated by intervening valley lines that are about equally as thick. Generally the lines run from left to right and as they do they first traverse upwards and later downwards. Given this amount of information, the Federal. Bureau of Investigation has suggested that fingerprint detection systems should provide an array of 512x512 pixels since it allows for at least four pixels per ridgeline and four per valley line. Preferably, though not necessarily, the imager employed in the FCPD 101 contains an array of at least 512x512 pixels. Using sophisticated fingerprint imaging algorithms such as those described in the above-referenced US Provisional Application 60//025,949, significantly smaller arrays can be employed. In one embodiment, the array may include 240x160 pixels or, in anther embodiment, 120x160 pixels. The use of such small arrays has the advantage of requiring (1) less processing resources from CPU 401 and (2) less space from memory 404 during processing of a large array of fingerprint data.

Accurate fingerprint matching technology, which is well-known in the art (see, for example, U.S. Pat. No. 2 952 181, 4 151 512, 4·322 163, 4 537 484, 4 747 147, 5 467 403), has for over a hundred years relied on the extraction and subsequent comparison of specialized features called minutiac. Minutiac are essentially of two equally frequent types - either the abrupt ending of a line in the middle of the fingerprint or the fusion of two lines to create a Y-shaped junction. Typically there are about 60 or 70 such features in a fingerprint and it is the relative location of these from cach other that creates a unique spatial pattern that statistically no other human can possess.

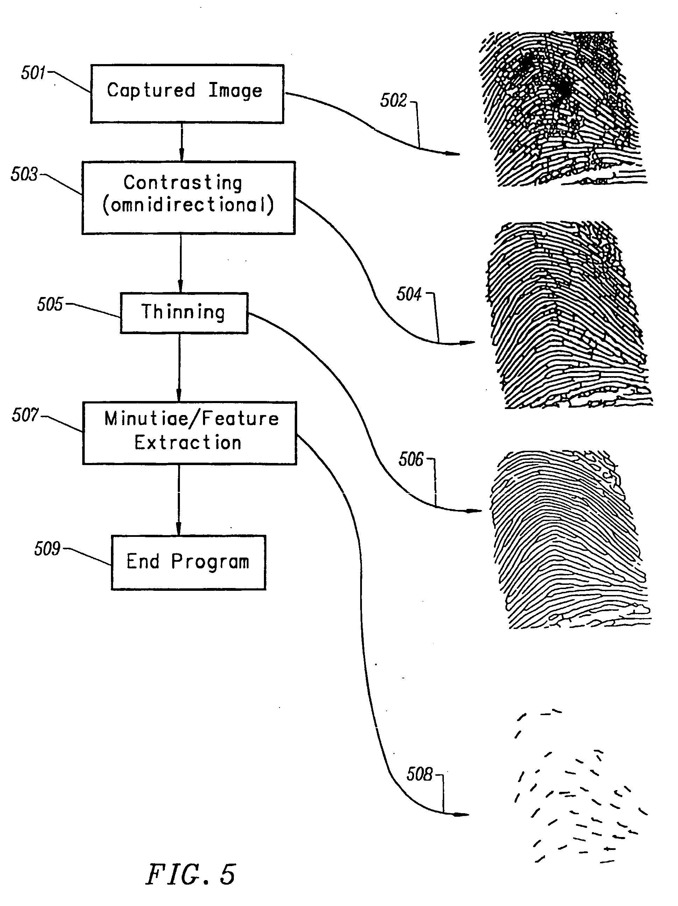

Suitable methods of fingerprint matching may involve software processing steps as illustrated in FIG. 5. After capturing the fingerprint image (step 501), a contrasting algorithm (step 503) reduces all the gray shades of a captured image 502 to either black (for ridgelines) or white (for valley lines) as shown in image 504. Traditionally these algorithms are omni-directional. Basically, the particular shade of gray at each pixel is compared with those of the neighboring pixels in all directions and if judged to be relatively darker than most of its neighbors it is deemed to be black, otherwise white. After this contrasting step, the contrasted image 504 is further processed by a thinning algorithm (step 505). The object here is to reduce the black lines from being on average four pixels thick to only one pixel thick, thereby increasing the number of white pixels substantially. A thinned image 506 is then examined by further algorithms (step 507) that attempt to deduce and accurately extract the minutiae and their locations as shown in a map 508. The process is then completed at 509. All further fingerprint matching/comparison often relies primarily on these 60 or 70 extracted pieces of information.

Central authentication system (CAS) 106 is preferably, though not necessarily, provided as a server or other node connected to one or more MSCs over a public switched telephone network. CAS 106 may also have wireless connection to an MSC or may even form a part of the MSC. Generally, CAS 106 must be able to generate and compare challenges, access a database of fingerprint based tokens, and communicate with a plurality of wireless sources (e.g., mobile cellular telephones) via the one or more MSCs.

FIG. 6 is a diagram of CAS 106 in accordance with one embodiment of this invention. The design is superficially similar to the FCPD 101 (and the design presented in U.S. Pat. No. 5,420,908). Connected to CAS 106 are PSTN 105 and MCKD 107. CAS 106 must be able to handle, simultaneously, many calls from many wireless carriers. It includes a memory 605 including a persistently stored program 606 and various temporarily stored items including a challenge 607, a response token 608, and a decrypted message 609. Program 606 contains the instructions for generating a challenge, encrypting the challenge with a fingerprint based token, validating a decrypted challenge (e.g., by comparison with the generated challenge), fingerprint matching based on tokens, and, in some embodiments, comparing a response token with one or more stored tokens and further assuring that tokens are not identical as that would imply illegal use. Response token 608 is a memory entity containing the token sent back from the FCPD 101 in the wireless telephone 102 before token matching is conducted. When a new token is provided from FCPD, stored token is updated.

In addition, CAS 106 includes a CPU 602 for controlling the execution of a program 606. accessing memory 605, communicating with the MSCs over the PSTN. Communication over the PSTN is provided through a data interface 601 in CAS 106 which is connected to the PSTN over a line 105. In addition, CAS 106 communicates with MCKD database 107 through a database interface 603 as shown. CPU 602, memory 605, database interface 603, and data interface 601 arc communicate with one another over a data bus 604.

In a preferred embodiment, the initial registration of the phone-owner's fingerprint at the CAS 106 to create the appropriate entry into the MCKD 107 need not require the user to visit the central phone service provider. When the phone-owner purchases or rents the wireless phone at local phone store he or she can use the FCPD 101 on the newly purchased wireless telephone 102 itself to activate registry at the CAS 106 via the common air interface and MSC 103. The phone's ESN and MIN can be sent along with the owner's fingerprint and placed in the CAS database for future use.

In yet another embodiment of the present invention, multiple users can be permitted to use the same wireless phone. All that is required is that the MCKD 107 at the CAS 106 be allowed to contain multiple CKs 202, one generated from each user of the same phone. Such authorization can in principle be activated/initiated by the phone owner serving as a master user who can at any time recruit additional users to be able to use their phone. By activating appropriate buttons on the phone, the master user can in principle activate the phone and the CAS 106 to receive a newly recruited user's fingerprint for association with the master user's entry in the MCKD 107. The master user can remotely authorize this action by simply validating it with his/her fingerprint. Again by engaging a pre-defined sequence of buttons on the phone the master user could also in principle remove previously authorized co-users.

In a further embodiment of the present invention the phone owner could use more than one fingerprint as a means to authenticate his/her identity. The MCKD 107 can be arranged to contain information regarding more than one fingerprint of the owner. In fact, if additional password-like security beyond fingerprint security is desired, the owner can provide multiple fingerprints from different fingers in a particular secret order. This can serve as a "password" known only to the owner.

In one use of the current invention, the traditional MINs and ESNs associated with wireless phones arc no longer required. The wireless telephone 102 will have an integrated FCPD 101. When a user dials a number, the number of the party being called and the token generated from the fingerprint of the user on the FCPD 101 will be sent to the MSC 103 and then forwarded to the CAS 106 for authentication based only on the fingerprint token of the user for billing and authorization purposes. Because each fingerprint token generated from the same finger will be different, a token intercepted from the common air interface can not easily be used for fraudulent use of wireless telephones. If a particular token generated from a fingerprint is captured illegally from the air interface and subsequently used repeatedly to authorize illegal calls, this can be detected very easily by the CAS 106 since it would in normal circumstances expect somewhat different and varied, tokens being generated from the same fingerprint. Because such variations in the generated token arc intrinsic to the way fingerprint information is distributed on the finger itself, these variations cannot be gleaned from illegally capturing one token common from the common air interface. That is, tokens generated from the same fingerprint at different impressions on the FCPD 101 will vary so that merely having illegally captured one of these variations will not enable the generation of varied tokens that are still meaningfully related to the original fingerprint. The only thing that can be done is to use the exact same illegally captured token to make illegal calls, but that can be easily detected. Thus it is possible that the systems of this invention can allow any user to use any wireless telephone to place calls.

In another use of the current invention, the identity of the user can be authenticated for the purpose of identifying the caller's personal identity rather than merely the phone number from the caller initiated the call - i.e. the source terminal-ID. In one embodiment of the present invention, al step 319 (FIG. 3), the caller's personal identity as determined by the CAS 106 can be made available to the call control entity or the recipient of the call. Based on the prior knowledge of who the caller is (and not just merely what phone number the caller is calling from) the call recipient may elect to block the call even after it has been authenticated as being non-fraudulent at step 314.

The current invention also provides a method for the identification of the caller (caller ID) originating the phone call. In recent years, caller ID technology (where the phone number of the caller's phone is automatically revealed to the call control entity or the recipient of the phone call in a manner that allows the recipient to screen his or her calls) has become increasingly commonplace. In effect, caller-ID as practiced today is really terminal-ID (the ID of the caller's phone) and not really the personal identity of the caller. With the present invention, wirelles and traditional wired phones that have the built-in capacity to capture/compare fingerprint information and communicate with an MSC for authorization can allow the caller to be personally identified (rather than simply the caller's phone number) to the call control entity or the recipient for call screening or other authentication purposes. Indeed, both the caller-ID and the terminal-ID can be jointly authenticated for an even higher level of security in phone networks.

As mentioned, the technology described herein may be employed in contexts other than cellular telephone systems. For example, the invention may be employed to ensure secure access to a vehicle with a wireless security system. Many automobiles now employ wireless systems to allow remote control of door locking, automotive alarm systems, lighting, etc. within the automobile. When the owner approaches his or her car, he or she can unlock the car doors or activate/inactivate other car systems before actually reaching the car. This is accomplished with the click of a button on a wireless control module. Unfortunately, if such a module falls into the hands of a thief (or if the wireless signal is illegally captured through the air and decoded), he may be able to circumvent the car's security mechanism(s) and obtain control of the car. The present invention provides a mechanism to protect against this possibility.

Wireless car security systems of this invention may employ a wireless control module (source) containing the logic necessary for capturing and transmitting a token based upon a user's fingerprint. The logic may be contained within a module as described above with reference to FCPD 101. Generally, the vehicle itself may provide most of the functionality described above with reference to CAS 106. Of course, it need not provide access to a PSTN or database 107. However, it should include a finger print token of the car operator and possibly multiple recently received tokens so that access may be blocked if the token exactly matches a received token.

The vehicle protection mechanism of this invention may operate as follows. First, the system on board the vehicle determines that a request for access to the vehicle has been initiated from a wireless source. Next, the vehicle system determines whether the source fingerprint data provided at the wireless source matches stored fingerprint data provided for the vehicle. Access to the vehicle is then permitted (e.g., car doors are unlocked) if the source fingerprint data matches the stored fingerprint data. In some embodiments, the wireless source may prompt its user for a fingerprint from which to generate the source fingerprint data.

In especially preferred embodiments, a full challenge-response protocol as described above with reference to Figures 3A and 3B is employed. This may involve generating an encrypted challenge from a challenge and a token based on the fingerprint data stored with the automobile. Then, the encrypted challenge and the stored fingerprint token are sent to the source where the stored and source fingerprints are compared. If they match, one of the fingerprints is used to decrypt the encrypted challenged. The now decrypted challenge and the source fingerprint data arc then sent back to the automobile where the decrypted challenge is confirmed and the source and stored fingerprints are again compared. If all tests are passed, access to the automobile is permitted.

While the present invention has been described in terms of a preferred embodiment and certain variations thereof, the scope should not be limited to the specifics presented above. For example, while the system of this invention has been described as including a central authentication system separated from a mobile switching center by a public switched telephone network, the invention may be implemented by providing the central authentication system within the mobile switching center. In this case, it may be necessary to provide a mechanism for regularly updating the authentication system at each mobile switching center. Further, the invention may be advantageously employed in systems that do not employ a secret key. Importantly, the invention may rely on biometric information other than fingerprints. Examples of such alternative biometric information include, but are not limited to, a user's voice, personal information, photograph, hand shape, and retina.

Many similar variations on the above-described preferred embodiment, may be employed. Therefore, the invention should be broadly interpreted with reference to the following claims.

## Claims

1. A method for authenticating a call to be made over a communication system, the method comprising:
a) determining that the call has been initiated from a source (300-305);
b) determining whether source fingerprint data provided from said source matches stored fingerprint data associated with said source (306-312); and
c) if said source fingerprint data matches said stored fingerprint data, allowing said call to be completed (314);
**characterised in that** the step of determining whether source fingerprint data provided from said source matches stored fingerprint data associated with said source comprises the steps of:
d) encrypting a challenge with said stored fingerprint data associated with said source to produce an encrypted challenge (306);
e) providing the encrypted challenge to the source for the purpose of decrypting by the source with the source fingerprint data (307-310);
f) receiving the decrypted challenge from said source, which decrypted challenge has been decrypted with the source fingerprint data (311); and
g) comparing the challenge with the decrypted challenge from the source (312); and
h) determining that the source fingerprint data provided from said source matches the stored fingerprint data associated with said source if the challenge matches the decrypted challenge from the source.

2. The method of claim 1, wherein the communication system forms at least part of a wireless telephone network, and wherein said source is a mobile cellular telephone.

3. The method of claim 2, wherein determining that a call is being initiated includes detecting transmission of at least one of a mobile identification number (MIN) and an electronic serial number (ESN) associated with the mobile cellular telephone (301);
the method further comprising confirming that said at least one of the MIN and the ESN is valid (302).

4. The method of any one of claims 1-3, further comprising:
requesting that said source fingerprint data be provided from the source of said call.

5. The method of any one of claims 1-4, wherein said fingerprint data is provided in an inter-minutiae distance-vector-derived format.

6. The method of any one of claims 1-5, further comprising:
determining whether the source fingerprint data is identical to one or more instances of sample fingerprint data previously received (313); and
if the source and any one of the instances of the sample fingerprint data are identical, preventing the call from being completed (315).

7. The method of claim 1, where the fingerprint data is provided in a timestamp.

## Patentansprüche

1. Verfahren zur Authentisierung eines Anrufes, der über ein Kommunikationssystem erfolgt, umfassend
Bestimmen, ob der Anruf von einer Quelle ausgeht (300 bis 305);
Bestimmen, ob die von der Quelle bereitgestellten Quellen-Identdaten mit den der Quelle gehörenden gespeicherten Identdaten übereinstimmen (306 bis 312); und,
stimmen die Quellen-Identdaten mit den gespeicherten Identdaten überein, Zulassen eines Durchschaltens des Anrufes (314);
**dadurch gekennzeichnet, dass** das Bestimmen, ob die von der Quelle bereitgestellten Identdaten mit den der Quelle gehörenden gespeicherten Identdaten übereinstimmen, die Schritte umfasst:
Verschlüsseln einer Abfrage mit den der Quelle gehörenden gespeicherten Identdaten, so dass man eine verschlüsselte Abfrage erhält (306);
Bereitstellen der verschlüsselten Abfrage der Quelle, so dass sie von der Quelle mit den Identdaten entschlüsselt werden kann (307 bis 310);
Empfangen der von der Quelle entschlüsselten Abfrage, wobei die entschlüsselte Abfrage mit den Identdaten (311) entschlüsselt wurde; und
Vergleichen der Abfrage mit der von der Quelle entschlüsselten Abfrage (312); und
Bestimmen, ob die von der Quelle bereitgestellten Identdaten mit den der Quelle zugehörigen gespeicherten Identdaten übereinstimmen, passt die Abfrage zu der von der Quelle entschlüsselten Abfrage.

2. Verfahren nach Anspruch 1, wobei das Kommunikationssystem mindestens ein Teil eines drahtlosen Telefonnetzes ist und wobei die Quelle ein mobiles Zelltelefon ist.

3. Verfahren nach Anspruch 2, wobei das Bestimmen, dass ein Anruf ausgeht, umfasst das Ermitteln einer Übertragung mindestens einer mobilen Identifikationsnummer (MIN) oder einer elektronischen Seriennummer (ESN), die dem mobilen Zelltelefon gehört (301);
wobei das Verfahren weiterhin umfasst das Bestätigen, dass mindestens die MIN oder die ESN gültig ist (302).

4. Verfahren nach irgendeinem der Ansprüche 1 bis 3, zudem umfassend ein Anfordern, dass die Quellen-Identdaten von der Quelle des Anrufs bereitgestellt werden.

5. Verfahren nach irgendeinem der Ansprüche 1 bis 4, wobei die Identdaten in Form eines Distanzvektors zwischen einzelnen Details (im Inter-Minutiae-Distance-Vector-Derived-Format) bereitgestellt wird.

6. Verfahren nach irgendeinem der Ansprüche 1 bis 5, zudem umfassend
das Bestimmen, ob die Quellen-Identdaten identisch sind zu ein oder mehreren früher empfangenen Versuchs-Identdaten (313); und
das Verhindern, dass der Anruf durchgestellt (315) wird, wenn die Quelle mit irgendwelchen Versuchs-Identdaten identisch ist.

7. Verfahren nach Anspruch 1, wobei die Identdaten in einem Zeitstempel bereitgestellt werden.

## Revendications

1. Procédé pour l'authentification d'un appel à effectuer par un système de communication, le procédé comprenant les étapes consistant à :
a) déterminer que l'appel a été initié à partir d'une source (300-305) ;
b) déterminer si les données d'empreintes digitales fournies par ladite source correspondent à des données d'empreintes digitales stockées associées à ladite source (306-312) ; et
c) si lesdites données d'empreintes digitales de source coïncident avec lesdites données d'empreintes digitales stockées, permettent que ledit appel soit complété (314);
**caractérisé en ce que** l'étape consistant à déterminer si lesdites données d'empreintes digitales de source fournies par ladite source coïncident avec lesdites données d'empreintes digitales stockées associées à ladite source comprend les étapes consistant à :
d) crypter une interrogation avec lesdites données d'empreintes digitales stockées associées à ladite source pour produire une interrogation cryptée (306) ;
e) transmettre l'interrogation cryptée à la source dans le but du déchiffrage par la source avec les données d'empreintes digitales de source (307-310) ;
f) recevoir l'interrogation déchiffrée de ladite source, ladite interrogation déchiffrée ayant été déchiffrée avec les données d'empreintes digitales de source (311) ; et
g) comparer l'interrogation avec l'interrogation déchiffrée de la source (312) ; et
h) déterminer que les données d'empreintes digitales de source fournies par ladite source coïncident avec les données d'empreintes digitales stockées associées à ladite source si l'interrogation coïncide avec l'interrogation déchiffrée de la source.

2. Procédé selon la revendication 1, où le système de communication fait au moins partie d'un réseau téléphonique sans fil, et où ladite source est un téléphone cellulaire mobile.

3. Procédé selon la revendication 2, dans lequel la détermination, à savoir qu'un appel est en train d'être initié, comprend la détection de la transmission d'au moins un parmi un numéro d'identification mobile (MIN) et un numéro électronique série (ESN) associé audit téléphone cellulaire mobile (301) ;
le procédé comprend en outre la confirmation qu'au moins l'un parmi le MIN et le ESN est valide (302).

4. Procédé selon l'une des revendications 1 à 3, comprenant en outre :
demander que lesdites données d'empreintes digitales de source soient fournies par la source dudit appel.

5. Procédé selon l'une des revendications 1 à 4, où lesdites données d'empreintes digitales sont prévues sous un format dérivé du vecteur de distance inter-minutiae.

6. Procédé selon l'une des revendications 1 à 5, comprenant en outre :
la détermination si les données d'empreintes digitales de source sont identiques à une ou plusieurs instances des données d'empreintes digitales d'échantillon précédemment reçues (313) ; et
si la source et l'une quelconque des instances des données d'empreintes digitales d'échantillon sont identiques, empêcher que l'appel soit complété (315).

7. Procédé selon la revendication 1, dans lequel les données d'empreintes digitales sont prévues dans un horodateur.
